# EUROPEAN PATENT SPECIFICATION

(11) **EP 3 886 265 B1**
(45) Date of publication and mention of the grant of the patent: **24.08.2022**
(21) Application number: 21155602.2
(22) Date of filing: 05.02.2021
(51) Int. Cl.: H01R 13/627, B60L 53/16

(54) **CHARGING CONNECTOR**
LADESTECKER
CONNECTEUR DE CHARGEUR

(30) Priority: 25.03.2020 JP 2020054322
(43) Date of publication of application: 29.09.2021
(73) Proprietor: Japan Aviation Electronics Industry, Limited, Tokyo 150-0043 (JP)
(72) Inventor: KUGO, Kazuki, Tokyo, 150-0043 (JP)
(74) Representative: Prüfer & Partner mbB Patentanwälte · Rechtsanwälte

(56) References cited:
- DE-A1-102009 044 179
- JP-A- 2014 003 005
- JP-A- 2017 027 824

## Description

### BACKGROUND OF THE INVENTION:

This invention relates to a charging connector, particularly to a charging connector which is used outdoors.

There is a charging connector supposed to be used outdoors. For example, a charging connector used to charge an electric car is supposed to be used outdoors. An example of the charging connector of this type is disclosed in JP 2017-27824 A (Patent Document 1).

As shown in Fig. 14, a charging connector 90 of Patent Document 1 is provided with a body 901, a lock lever 903, a release mechanism 905 and a release regulating mechanism 907. The lock lever 903 has a locking portion 913. When the charging connector 90 is mated with an inlet 95, the locking portion 913 engages with a locked portion 951 and locks a mated state of the charging connector 90 and the inlet 95. The release mechanism 905 has a release button 915. Upon operating the release button 915, the release mechanism 905 releases the lock of the mated state of the charging connector 90 and the inlet 95. Under a predetermined condition, the release regulating mechanism 907 regulates releasing the lock of the mated state that is carried out by the release mechanism 905.

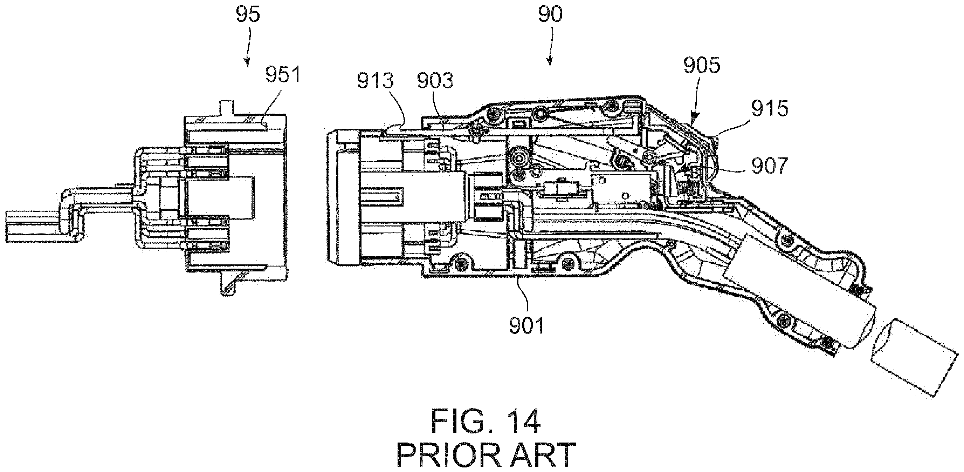

As understood from Fig. 14, each of the lock lever 903 and the release button 915 is arranged to extend from inside to outside the body 901. Moreover, each of the lock lever 903 and the release button 915 is attached to the body 901 so as to be movable with respect to the body 901. Accordingly, a gap inevitably exists between the body 901 and each of the lock lever 903 and the release button 915. And, this gap could be an entrance for water such as rainwater. In order to drain the water entered into the body 901, the charging connector 90 is provided with a drain hole (not shown).

DE 10 2009 044179 A1 discloses a power supply connector part according to the preamble of claim 1.

### SUMMARY OF THE INVENTION:

In the charging connector 90 of Patent Document 1, all the water entering the body 901 is not always drained through the drain hole. In addition, the water left in the body 901 may be frozen by the drop in outside temperature. The water frozen in the body 901 may prevent a movable portion arranged in the body 901 from operating.

It is therefore an object of the present invention to provide a charging connector in which, even if the water entering the charging connector is frozen, movement of a movable portion is not affected by the frozen water.

The above mentioned object of the present invention is achieved by the charging connector according to claim 1.

In the charging connector of one aspect of the present invention, the regulating portion of the button member and the regulated portion of the operation regulating mechanism are covered with the cover portion of the button member when viewed from above. Accordingly, the water entering the charging connector from around the button member is interrupted by the cover portion and does not reach the regulating portion and the regulated portion substantially. Therefore, even if the water entering the charging connector is frozen, the regulating portion and the regulated portion are maintained in a movable state. In other words, even if the water entering the charging connector is frozen, movement of the movable portion of the charging connector is not influenced by the frozen water but is allowed.

An appreciation of the objectives of the present invention and a more complete understanding of its structure may be had by studying the following description of the preferred embodiment and by referring to the accompanying drawings.

### BRIEF DESCRIPTION OF THE DRAWINGS:

Fig. 1 is a perspective view showing a charging connector according to an embodiment of the present invention. The charging connector is attached to an end of a cable.
Fig. 2 is an exploded, perspective view showing the charging connector of Fig. 1.
Fig. 3 is a front view showing the charging connector of Fig. 1.
Fig. 4 is a cross-sectional view showing the charging connector of Fig. 3, taken along line A-A. However, a plug included in the charging connector is drawn as a side view. Moreover, the charging connector is not attached to the cable.
Fig. 5 is a cross-sectional view showing a lock mechanism assembly included in the charging connector of Fig. 4. A lock lever and a button member which are included in the lock mechanism assembly are positioned at initial positions, respectively. A movable portion of an operation regulating mechanism included in the lock mechanism assembly is positioned at a release position.
Fig. 6 is another cross-sectional view showing the lock mechanism assembly included in the charging connector of Fig. 4. The lock lever and the button member are positioned at the initial positions, respectively. The movable portion of the operation regulating mechanism is positioned at a regulated position.
Fig. 7 is an exploded, perspective view showing the lock mechanism assembly included in the charging connector of Fig. 2.
Fig. 8 is another exploded, perspective view showing the lock mechanism assembly included in the charging connector of Fig. 2.
Fig. 9 is a perspective view showing a case included in the lock mechanism assembly of Fig. 7 or 8.
Fig. 10 is a rear view showing the case of Fig. 9.
Fig. 11 is a plane view showing the lock mechanism assembly included in the charging connector of Fig. 2.
Fig. 12 is a side view showing the lock mechanism assembly of Fig. 11.
Fig. 13 is a rear view showing the lock mechanism assembly of Fig. 11.
Fig. 14 is a cross-sectional view showing a charging connector and an inlet which are disclosed in Patent Document 1.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the present invention as defined by the appended claims.

### DESCRIPTION OF PREFERRED EMBODIMENTS:

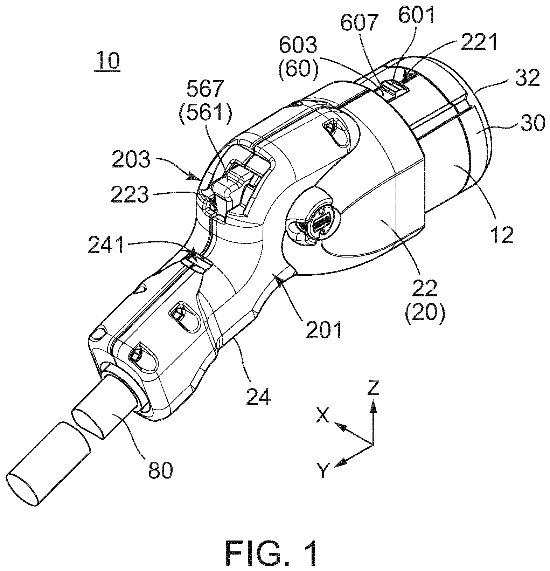

Referring to Fig. 1, a charging connector 10 according to an embodiment of the present invention is attached to an end of a cable 80. The charging connector 10 is a connector mateable with an inlet (not shown) having a locked portion (not shown) along a front-rear direction. The charging connector 10 has a mating portion 12 at a front end thereof in the front-rear direction. In the present embodiment, the front-rear direction is a Y-direction. A negative Y-direction is directed forward while a positive Y-direction is directed rearward.

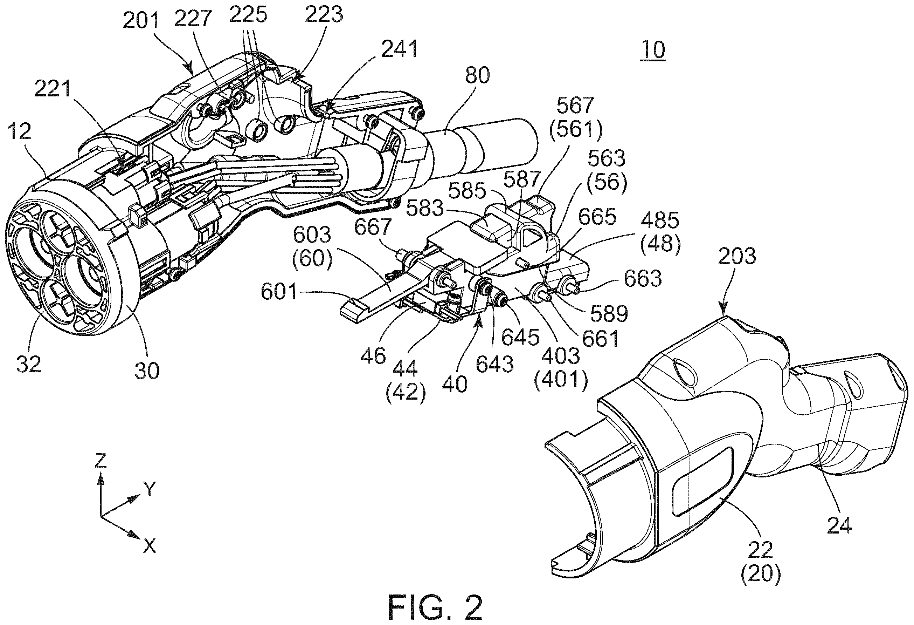

As shown in Fig. 2, the charging connector 10 is provided with a body 20, a plug 30 and a lock mechanism assembly 40. The body 20 consists of a pair of shells 201 and 203 and has a trunk portion 22 and a grip portion 24. The plug 30 and the lock mechanism assembly 40 are held by the body 20.

As understood from Fig. 1, the trunk portion 22 of the body 20 extends in the front-rear direction. The trunk portion 22 forms a part of the mating portion 12 in part. The grip portion 24 extends rearward-diagonally downward from the trunk portion 22. The trunk portion 22 is provided with a lock aperture portion 221 and a button aperture portion 223. Moreover, the grip portion 24 is provided with a sign window 241. Each of the lock aperture portion 221, the button aperture portion 223 and the sign window 241 could be an entrance for water such as rainwater. In the present embodiment, the up-down direction is a Z-direction perpendicular to the front-rear direction. A positive Z-direction is directed upward while a negative Z-direction is directed downward.

As shown in Fig. 2, the plug 30 is provided to a front portion of the trunk portion 22. The lock mechanism assembly 40 is provided to extend from the trunk portion 22 to the grip portion 24. The trunk portion 22 is provided with a lock spring 227 which acts on the lock mechanism assembly 40. To the plug 30, the cable 80 is connected. The cable 80 extends from a rear portion of the grip portion 24 to outside the grip portion 24.

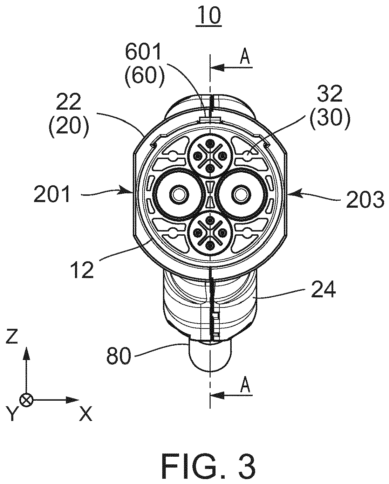

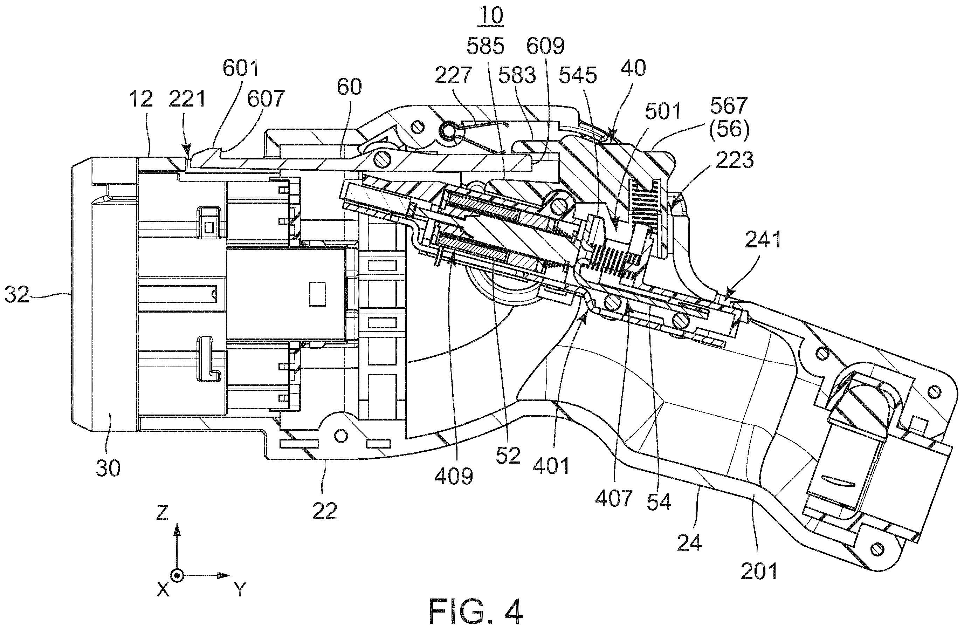

As understood from Figs. 3 and 4, the plug 30 protrudes forward from the trunk portion 22 of the body 20 in part. In the front-rear direction, a front end 32 of the plug 30 forms a front end of the charging connector 10. The protruding part of the plug 30 forms a remaining part of the mating portion 12. Since the plug 30 is not related to the present invention directly, and its detail description will be omitted.

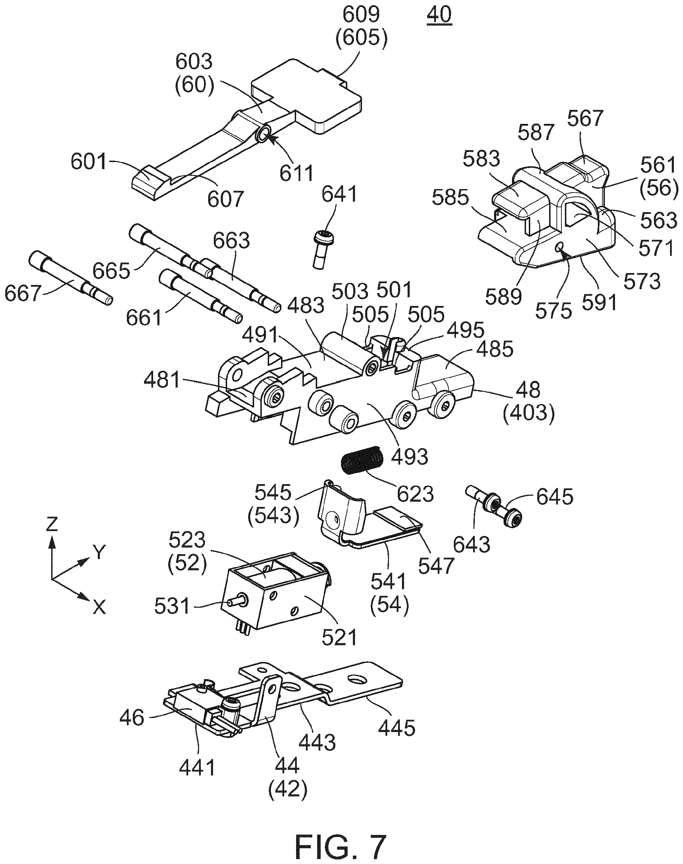

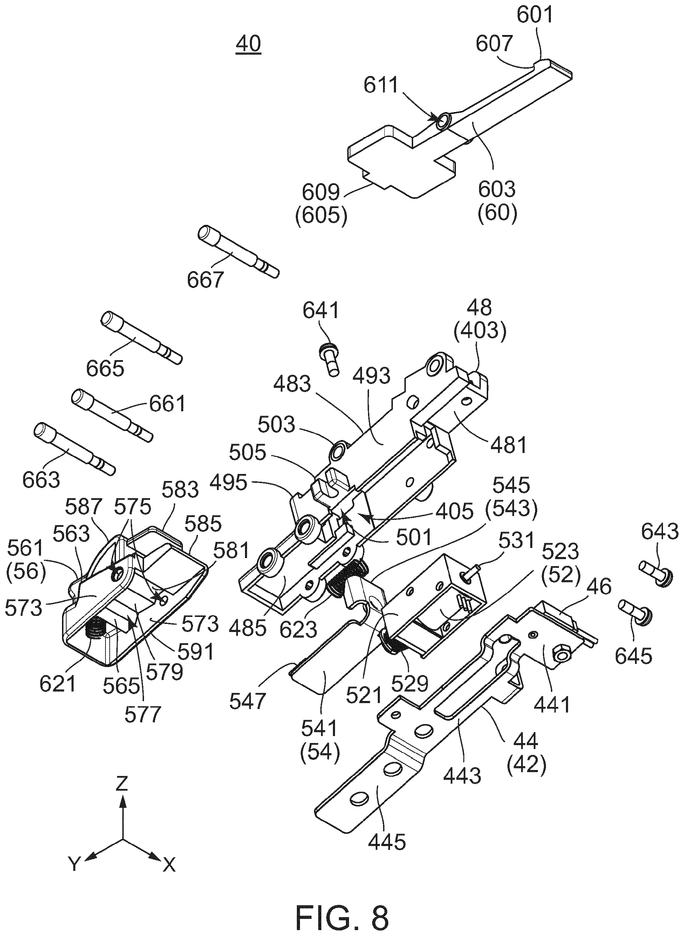

As shown in Figs. 7 and 8, the lock mechanism assembly 40 is provided with a base portion 42, a case 48, a solenoid 52, a lock plate 54, a button member 56, a lock lever 60, springs 621 and 623, fixing screws 641, 643 and 645 and pivoting axes 661, 663, 665 and 667.

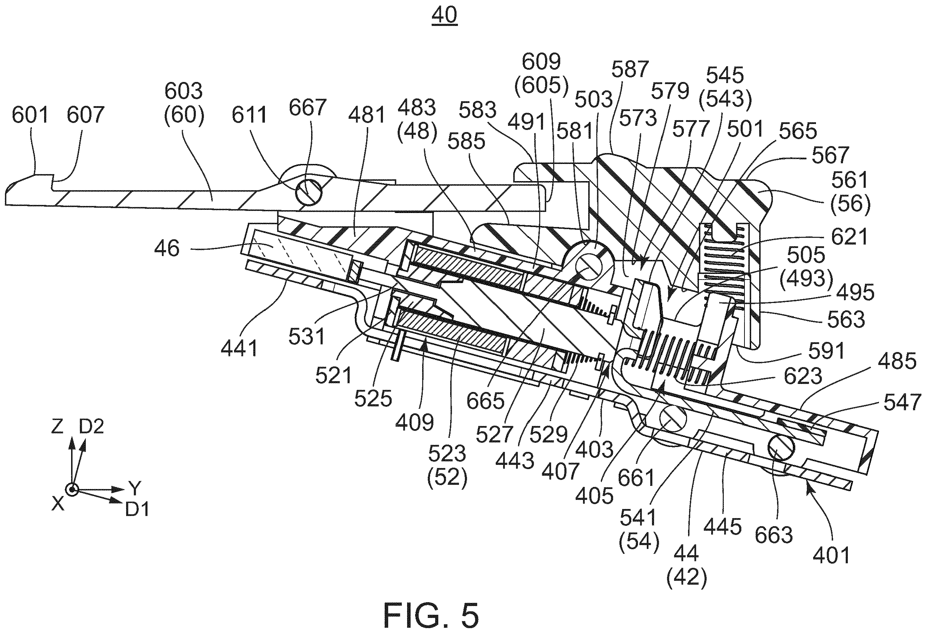

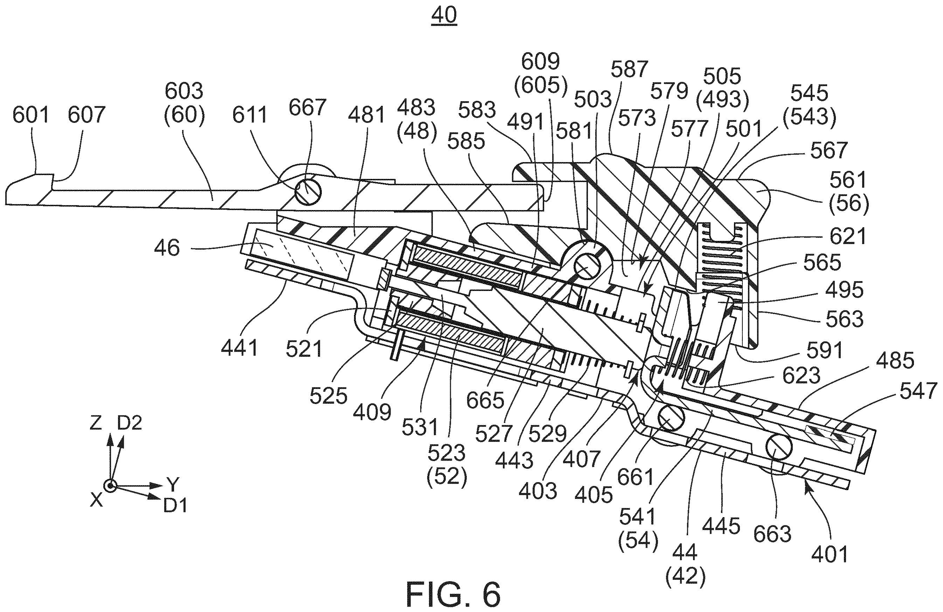

As understood from Fig. 7, the base portion 42 has a base plate 44 and a sensor portion 46. As shown in Figs. 5 and 6, the base plate 44 has a front portion 441, a middle portion 443 and a rear portion 445 each of which extends in a first predetermined direction D1. Between the front portion 441 and the middle portion 443, a step is provided. Also, between the middle portion 443 and the rear portion 445, another step is provided. However, the present invention is not limited thereto. The base plate 44 may have a simple shape having no step. The sensor portion 46 is mounted on the front portion 441 of the base plate 44. In the present embodiment, the first predetermined direction D1 is a direction intersecting with the front-rear direction. The first predetermined direction D1 is also a direction perpendicular to a lateral direction perpendicular to both of the front-rear direction and the up-down direction. In the present embodiment, the lateral direction is an X-direction. Since the sensor portion 46 is not related to the present invention directly, and its detail description will be omitted.

As shown in Figs. 7 to 9, the case 48 has a front portion 481, a middle portion 483 and a rear portion 485. In the present embodiment, the case 48 is made of a transparent material. As understood from Figs. 5 and 6, the front portion 481 extends forward-diagonally upward from an upper front portion of the middle portion 483 in the first predetermined direction D1. The rear portion 485 extends rearward-diagonally downward from a lower rear portion of the middle portion 483 in the first predetermined direction D1.

As understood from Figs. 7 to 10, the middle portion 483 of the case 48 has an upper portion 491, a pair of sidewalls 493 and a rear wall 495. The sidewalls 493 are located at both sides of the upper portion 491 in the lateral direction and extend downward in the up-down direction. In detail, the sidewalls 493 extend diagonally downward in a second predetermined direction D2 perpendicular to the first predetermined direction D1. The rear wall 495 extends downward in the up-down direction from a rear edge of the upper portion 491. In detail, the rear wall 495 extends diagonally downward in the second predetermined direction D2. Moreover, the rear wall 495 couples rear edges of the sidewalls 493 with each other in the lateral direction.

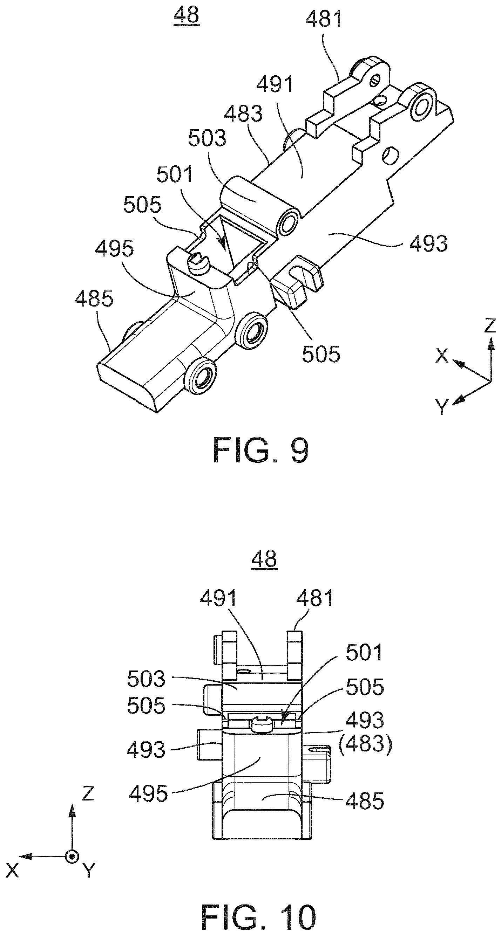

As shown in Fig. 9, the upper portion 491 of the case 48 is provided with an opening portion 501 and a bearing portion 503. The bearing portion 503 is located forward of the opening portion 501 in the front-rear direction. As understood from Fig. 10, the bearing portion 503 has a size larger than that of the opening portion 501 in the lateral direction. Although the opening portion 501 could be a passage of water, the bearing portion 503 prevents the water from flowing toward the opening portion 501. In detail, the bearing portion 503 interrupts the water flowing rearward-diagonally downward on a surface of the upper portion 491 of the case 48 along the first predetermined direction D1 and prevents the water from entering the opening portion 501.

As shown in Figs. 9 and 10, around the opening portion 501, a pair of shield portions 505 extending in a direction intersecting with the lateral direction is provided. In the present embodiment, the shield portions 505 are parts of the sidewalls 493 and extend in a direction perpendicular to the lateral direction. An upper edge of each of the shield portions 505 is provided with a step. However, the present invention is not limited thereto. The shield portions 505 may be provided to be independent of the sidewalls 493 or to substitute for the sidewalls 493. Moreover, the shield portions 505 may be provided to extend in directions intersecting with each other. In that case, the shield portions 505 may be provided so that an interval therebetween is increased as a distance from the opening portion 501 is increased. In addition, the upper edges of the shield portions 505 may be straight or curved.

As understood from Figs. 7 and 8, the case 48 is fixed to the base plate 44 of the base portion 42 using the fixing screws 641 and 643. The case 48 and the base plate 44 form a housing 403. The housing 403 holds the solenoid 52, the lock plate 54 and the springs 621 and 623. The housing 403, the solenoid 52, the lock plate 54 and the springs 621 and 623 form an operation regulating mechanism 401. Thus, the charging connector 10 is provided with the operation regulating mechanism 401, and the operation regulating mechanism 401 is provided with the housing 403, the solenoid 52, the lock plate 54 and the springs 621 and 623.

As shown in Figs. 5 and 6, the solenoid 52 is mounted on the middle portion 443 of the base plate 44 and is accommodated inside the housing 403. Inside the housing 403, there remains an additional protection room 405 rearward of the solenoid 52. Thus, the housing 403 forms the additional protection room 405. In other words, the operation regulating mechanism 401 has the additional protection room 405.

As shown in Figs. 5 to 8, the solenoid 52 is provided with a frame 521, a coil 523, a fixed iron core 525, a plunger 527 and a return spring 529. The frame 521 is fixed to the case 48 using fixing screws 643 and 645. The coil 523 is arranged inside the frame 521. The fixed iron core 525 is arranged inside the coil 523. The plunger 527 is inserted inside the coil 523 in part. A rear end of the plunger 527 protrudes rearward-diagonally downward from the coil 523 in the first predetermined direction D1. A front end of the plunger 527 is provided with a push pin 531. The push pin 531 pierces the fixed iron core 525 and the frame 521 and protrudes forward-diagonally upward in the first predetermined direction D1. The return spring 529 applies a force directed rearward-diagonally downward to the plunger 527 in the first predetermined direction D1.

As understood from Figs. 5 and 6, the plunger 527 of the solenoid 52 is movable with respect to the frame 521, the coil 523 and the fixed iron core 525. The plunger 527 forms a movable portion 407 in the operation regulating mechanism 401 at least in part. In the present embodiment, the plunger 527 forms the movable portion 407 in part. The plunger 527 is movable along the first predetermined direction D1 intersecting with the front-rear direction. Since a moving direction of the plunger 527 is inclined against the front-rear direction, a size of the charging connector 10 can be decreased in the front-rear direction.

As understood from Figs. 5 and 6, the coil 523 of the solenoid 52 forms, at least in part, a driving portion 409 which drives the movable portion 407 in the operation regulating mechanism 401. In the present embodiment, the coil 523 forms the driving portion 409 in part. In detail, the coil 523 forms the driving portion 409 together with the fixed iron core 525 and the return spring 529. Thus, the operation regulating mechanism 401 is provided with the driving portion 409. The driving portion 409 drives the movable portion 407 between a regulated position and a release position.

As shown in Figs. 5 and 6, the additional protection room 405 is located rearward of the driving portion 409 in the front-rear direction and accommodates the movable portion 407 in part. The plunger 527 extends from the driving portion 409 to the inside of the additional protection room 405. Moreover, the opening portion 501 of the case 48 is provided to an upper portion of the additional protection room 405.

As shown in Figs. 5 to 8, the lock plate 54 has a slide portion 541 and a driven portion 543. The slide portion 541 extends in the first predetermined direction D1. The driven portion 543 is located at a front end of the slide portion 541 in the front-rear direction. The driven portion 543 extends from the slide portion 541 in the second predetermined direction D2. The lock plate 54 has an about L-shape when viewed along the lateral direction. An upper end of the driven portion 543 forms a regulating portion 545. In other words, the regulating portion 545 is provided on the lock plate 54. The driven portion 543 is accommodated in the additional protection room 405 in part and protrudes outside the case 48 through the opening portion 501. In the present embodiment, the regulating portion 545 is located outside the case 48. However, the present invention is not limited thereto. The regulating portion 545 may be located inside the additional protection room 405.

As shown in Figs. 4 to 7, the lock plate 54 is provided with a lock sign 547. The lock sign 547 may be formed by means of a resin plate, a label or coating. The lock sign 547 is provided at a position which is visible through the sign window 241 when the driving portion 409 is positioned at the regulated position. In the present embodiment, the lock sign 547 is provided on an upper surface of the slide portion 541. However, the present invention is not limited thereto. The position of the lock sign 547 may be changed according to a shape of the lock plate 54 and a position of the sign window 241. Moreover, a release sign may be provided in place of the lock sign 547 so that the release sign is visible through the sign window 241 when the driving portion 409 is positioned at the release position.

As shown in Figs. 5 and 6, the lock plate 54 is arranged above the base plate 44 and rearward of the solenoid 52. The driven portion 543 of the lock plate 54 face a rear end of the plunger 527 of the solenoid 52 in the first predetermined direction D1. Between the lock plate 54 and the base plate 44, the pivoting axes 661 and 663 are provided. The lock plate 54 is movable on the pivoting axes 661 and 663 in the first predetermined direction D1. In the present embodiment, the lock plate 54 is movable in conjunction with the plunger 527 in the predetermined direction D1. In other words, the lock plate 54 forms the movable portion 407 of the operation regulating mechanism 401 together with the plunger 527. Thus, the operation regulating mechanism 401 is provided with the movable portion 407, and the movable portion 407 has the regulating portion 545.

As shown in Figs. 7 and 8, the button member 56 has a button portion 561, a cover portion 563 and a regulated portion 565. An upper surface of the button portion 561 functions as an operation portion 567. In other words, the button member 56 has the operation portion 567. In the present embodiment, the operation portion 567 has two flat surfaces and a curved surface therebetween. However, the present invention is not limited thereto. A shape of the operation portion 567 may be changed freely.

As understood from Figs. 7 and 8, the cover portion 563 has an upper portion 571 and a protection portion 573. In the present embodiment, the upper portion 571 is formed in a staircase shape. However, the present invention is not limited thereto. The upper portion 571 may be formed in a single flat shape. The operation portion 567 is provided on the upper portion 571 of the cover portion 563. In other words, the cover portion 563 is located downward of the operation portion 567 in the up-down direction.

As shown in Fig. 7 and 8, the protection portion 573 of the cover portion 563 extends downward from the upper portion 571 in the up-down direction. The protection portion 573 is formed with an axis hole 575 which pierces the protection portion 573 in the lateral direction. The upper portion 571 and the protection portion 573 form a protection room 577. The upper portion 571 has a lower surface 579 which defines the protection room 577 in part. The lower surface 579 of the upper portion 571 is the lower surface 579 of the cover portion 563. The lower surface 579 is formed with a hollow portion 581 corresponding to the pivoting axis 665. Also, the lower surface 579 is provided with the regulated portion 565. The regulated portion 565 extends downward from the lower surface 579 of the cover portion 563.

As shown in Figs. 7 and 8, the button member 56 further has an upper extension portion 583, a lower extension portion 585 and a guide portion 587. The guide portion 587 is formed on the cover portion 563. The guide portion 587 is located around the middle of the button member 56 in the front-rear direction. The upper extension portion 583 protrudes forward from the guide portion 587 of the cover portion 563. The lower extension portion 585 extends forward from the upper portion 571 of the cover portion 563. However, there is not a clear boundary between the lower extension portion 585 and the upper portion 571 of the cover portion 563. The upper extension portion 583 and the lower extension portion 585 are apart from and face each other in the up-down direction. In the present embodiment, the upper extension portion 583 and the lower extension portion 585 are coupled with each other by supporting wall 589.

As understood from Figs. 5 and 6, the button member 56 is attached to the bearing portion 503 provided in the operation regulating mechanism 401 by means of the pivoting axis 665. The pivoting axis 665 is supported by the bearing portion 503 pivotably, and the button member 56 can seesaw around the pivoting axis 665. As shown in Figs. 1 and 4, the button portion 561 protrudes, in part, outside the body 20 from the button aperture portion 223 when in an unloaded state. In addition, the operation portion 567 is located outside the body 20.

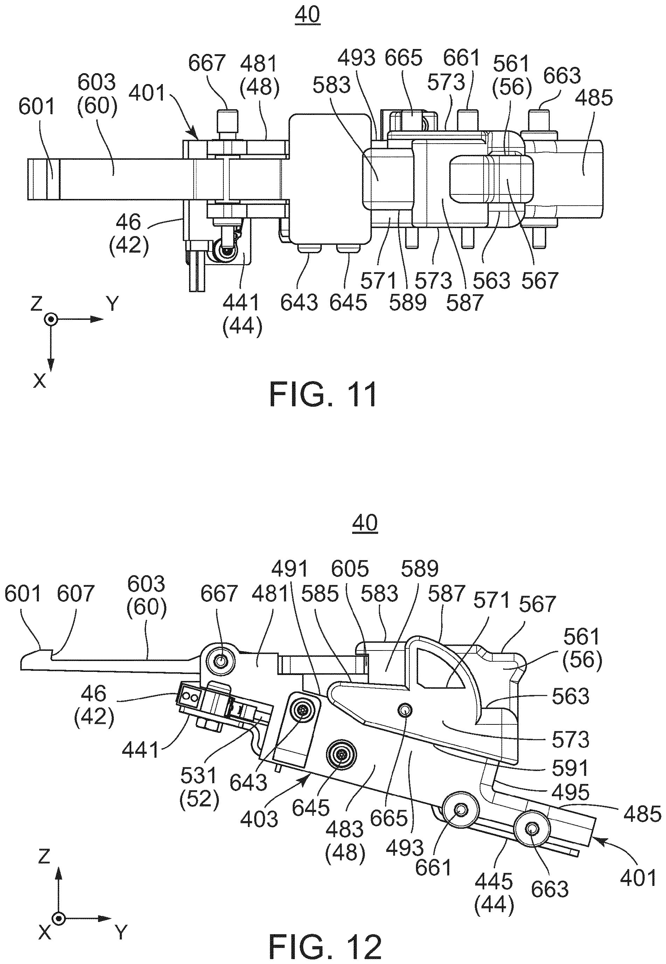

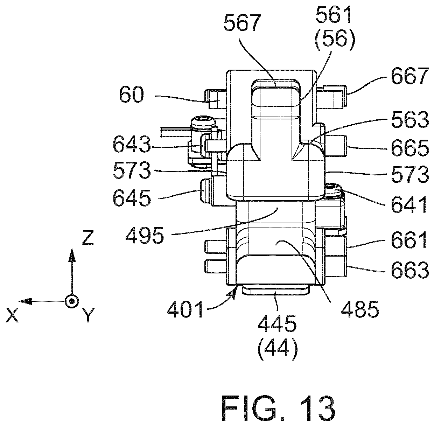

As understood from Figs. 5, 6 and 11 to 13, the cover portion 563 covers the opening portion 501 of the case 48 from above in the up-down direction. In detail, the opening portion 501 of the case 48 is located in the protection room 577 formed by the cover portion 563. Moreover, the bearing portion 503 is received by the protection room 577. Each of the shield portions 505 and the rear wall 495 is received by the protection room 577 at least in part. With this structure, when viewed from above in the up-down direction, the regulating portion 545 and the regulated portion 565 are covered with the cover portion 563. Moreover, when viewed from above in the up-down direction, the shield portions 505 are located in a region formed by a lower edge 591 of the protection portion 573. Furthermore, when viewed along the lateral direction, the shield portions 505 overlap with the protection portion 573. In this structure, water entering the body 20 from the button aperture portion 223 does not pass through the opening portion 501 to enter the housing 403, provided that it follows gravity. The water does not even reach to the regulating portion 545 and the regulated portion 565 which are located inside or in the vicinity of the opening portion 501. Accordingly, the movable portion 407 would not stop working due to the water that enters the body 20 through the button aperture portion 223.

As shown in Figs. 7 and 8, the lock lever 60 has a lock lug 601, an arm portion 603 and an operated portion 605. The lock lug 601 is provided in the vicinity of a front end of the arm portion 603. A rear surface 607 of the lock lug 601 functions as a locking portion 607. In other words, the charging connector 10 is provided with the lock lever 60 and the locking portion 607, and the locking portion 607 is provided to the lock lever 60. The locking portion 607 locks a mated state of the charging connector 10 and an inlet (not shown). In other words, the locking portion 607 engages with the locked portion (not shown) when the charging connector 10 is mated with the inlet. The operated portion 605 is provided to a rear end of the arm portion 603. A rear end portion 609 of the operated portion 605 coincides with a rear end portion 609 of the lock lever 60. The rear end portion 609 is apart from the locking portion 607 in the front-rear direction. A middle portion of the arm portion 603 is provided with an axis hole 611.

As understood from Figs. 5 to 8, the lock lever 60 is attached to the case 48 by means of a pivoting axis 667. The lock lever 60 can seesaw around the pivoting axis 667. With this structure, the lock lug 601 is movable with respect to the body 20 at least in up-down direction. As shown in Figs. 1 and 4, the lock lug 601 protrudes outside the mating portion 12 at least in part through the lock aperture portion 221 when the lock lever 60 is in an initial position. The initial position of the lock lever 60 is a lock position where a mated state of the charging connector 10 and the inlet (not shown) is locked. Here, the lock aperture portion 221 is apart from the lock mechanism assembly 40 in the front-rear direction. Accordingly, the water entering the body 20 through the lock aperture portion 221 would not substantially affect movement of the movable portion 407.

As understood from Fig. 4, the lock spring 227 works so as to place the lock lever 60 at the initial position. The lock lever 60 is supported by the lock spring 227 and positioned at the initial position when in an unloaded state. The lock lug 601 is pushed down in the up-down direction once in the middle of mating of the charging connector 10 and the inlet (not shown). In this time, the lock spring 227 is resiliently deformed. Then, the lock spring 227 returns the lock lever 60 to the initial position by its reaction force when mating of the charging connector 10 and the inlet (not shown) is completed.

As understood from Figs. 5 and 6, the rear end portion 609 of the operated portion 605 of the lock lever 60 is located between the upper extension portion 583 of the button member 56 and the lower extension portion 585 of the button member 56. In the up-down direction, a thickness size of the operated portion 605 is smaller than an interval size between the upper extension portion 583 and the lower extension portion 585. With this structure, the operated portion 605 is always apart from at least one of the upper extension portion 583 and the lower extension portion 585. In the present embodiment, when the lock lever 60 is positioned at the initial position, the operated portion 605 is positioned nearer to the upper extension portion 583 than to the lower extension portion 585. In this time, the operated portion 605 may be in contact with the upper extension portion 583.

As understood from Fig. 2, the lock mechanism assembly 40 is held by the body 20 to be immovable. In detail, the pivoting axes 661 and 663 are held by axis supporting portions 225 of the body 20 so as to be immovable. Accordingly, the case 48 cannot be moved with respect to the body 20. On the other hand, each of the lock lever 60 and the button member 56 is attached to the case 48 so as to be able to seesaw. Accordingly, the lock lug 601 of the lock lever 60 is movable with respect to the body 20. In addition, the operation portion 567 of the button member 56 is movable with respect to the body 20. In detail, the operation portion 567 is movable with respect to the body 20 at least in the up-down direction.

As shown in Figs. 5 and 6, between the lower surface 579 of the button member 56 and the rear wall 495 of the case 48, the spring 621 is arranged. The spring 621 supports the button portion 561 of the button member 56 from beneath. The button portion 561 of the button member 56 is operable to be pressed down in the up-down direction. In other words, the operation portion 567 is operable to be pressed down in the up-down direction. The spring 621 serves to push back the button portion 561 upward when the operation portion 567 of the button member 56 is pressed down in the up-down direction. When in the unloaded state, the button member 56 is positioned at the initial position due to a function of the spring 621.

As shown in Figs. 5 and 6, between the driven portion 543 of the lock plate 54 and the rear wall 495 of the case 48, a spring 623 is arranged. The spring 623 gives a force directed to the solenoid 52 on the driven portion 543 of the lock plate 54. The force of the spring 623 is weaker than the force of the return spring 529.

As understood from Fig. 6, when the solenoid 52 is in a return state, the return spring 529 of the solenoid 52 moves the plunger 527 rearward-diagonally downward in the predetermined direction D1. In this time, a rear end of the plunger 527 pushes the driven portion 543 of the lock plate 54 rearward-diagonally downward in the predetermined direction D1. The lock plate 54 is moved rearward-diagonally downward in the predetermined direction D1 against the force of the spring 623. Thus, the plunger 527 and the lock plate 54 are moved in conjunction with each other, so that the movable portion 407 is positioned at the regulated position.

As shown in Fig. 5, when the solenoid 52 is in a pull state, the plunger 527 is moved forward-diagonally upward in the predetermined direction D1 by the coil 523 and the fixed iron core 525. This movement of the plunger 527 is performed against the force of the return spring 529. Accordingly, the lock plate 54 does not receive a pushing force directed rearward-diagonally downward in the predetermined direction D1. Moreover, in this time, the plunger 527 works as an electromagnet and attracts the driven portion 543 of the lock plate 54. As a result, the lock plate 54 is moved forward-diagonally upward in the predetermined direction D1 with help of a function of the spring 623. In this way, the plunger 527 and the lock plate 54 work in conjunction with each other, so that the movable portion 407 is positioned at a release position.

As shown in Fig. 5, when the movable portion 407 is positioned at the release position, the regulating portion 545 and the regulated portion 565 do not face each other. In this state, the operation portion 567 of the button member 56 is allowed to be moved downward in the up-down direction. This means that when the lock lug 601 is moved downward in the up-down direction, the rear end portion 609 of the lock lever 60 can push up the upper extension portion 583 of the button member 56. Accordingly, the charging connector 10 can be mated with the inlet (not shown).

As shown in Fig. 6, when the movable portion 407 is positioned at the regulated position, the regulating portion 545 and the regulated portion 565 face each other in the protection room 577. However, the present invention is not limited thereto. The regulating portion 545 and the regulated portion 565 may face each other outside the protection room 577. In this case, "outside the protection room 577" is an area lower than it in the up-down direction and inside the housing 403. At any rate, when the movable portion 407 is positioned at the regulated position, the regulating portion 545 and the regulated portion 565 face each other through the opening portion 501.

As understood from Fig. 6, when the movable portion 407 is positioned at the regulated position, the regulated portion 565 is brought into abutment with the regulating portion 545 if the operation portion 567 is pressed down in the up-down direction. Accordingly, the operation portion 567 cannot be moved downward in the up-down direction. In other words, when the movable portion 407 is positioned at the regulated position, the regulating portion 545 regulates downward movement of the regulated portion 565 to regulate downward movement of the operation portion 567.

As understood from Fig. 6, when the movable portion 407 is positioned at the regulated position, the operated portion 605 is tried to be moved upward in the up-down direction if unexpected downward force works on the lock lug 601 in the up-down direction. Then, the rear end portion 609 of the operated portion 605 is brought into abutment with the upper extension portion 583. When the upper extension portion 583 receives an upward force, the button portion 561 is tried to be moved downward in the up-down direction. This movement of the button portion 561 is regulated by functions of the regulated portion 565 and the regulating portion 545. Accordingly, in a case where the unexpected force acts on the lock lug 601, the lock state is maintained when the charging connector 10 and the inlet (not shown) are mated with each other and in a locked state.

As understood from Fig. 4, when the charging connector 10 and the inlet (not shown) are mated with each other, upward movement of the lock lug 601 is regulated by the inlet in the up-down direction. Moreover, as mentioned above, when the movable portion 407 is positioned at the regulated position, downward movement of the lock lug 601 is regulated in the up-down direction. Accordingly, when the movable portion 407 is positioned at the regulated position, the lock lever 60 is positioned at the initial position.

As shown in Fig. 6, when the lock lever 60 is positioned at the initial position, the lower extension portion 585 of the button member 56 is positioned apart from the rear end portion 609 of the operated portion 605 of the lock lever 60. Accordingly, even if the operation portion 567 is pressed down in the up-down direction to move the button member 56, the lower extension portion 585 never pushes the rear end portion 609 of the operated portion 605. In other words, since the rear end portion 609 of the lock lever 60 is apart from the lower extension portion 585 of the button member 56, the button member 56 cannot move the lock lever 60 accidentally even if the button member 56 is slightly moved under a condition where the mated state is locked. Therefore, the lock lug 601 is never moved downward in the up-down direction. Thus, when the charging connector 10 and the inlet are mated with each other and in the locked state, the locked state is maintained.

As shown in Fig. 5, when the movable portion 407 is positioned at the release position, the regulating portion 545 and the regulated portion 565 do not face each other. Thus, the regulating portion 545 allows downward movement of the regulated portion 565 to allow downward movement of the operation portion 567. In other words, the operation portion 567 can be moved downward in the up-down direction. Then, when the operation portion 567 is pressed down, the lower extension portion 585 of the button member 56 pushes up the rear end portion 609 of the operated portion 605 of the lock lever 60 in the up-down direction so that the lock lug 601 is moved downward in the up-down direction. Thus, the lock lug 601 does not protrude from the mating portion 12 so that the lock state is released into an unlock state.

As shown in Figs. 5 and 6, the housing 403 of the operation regulating mechanism 401 covers the lock sign 547. In order that the lock sign 547 is visible through the housing 403, the case 48 forming the housing 403 is made of a transparent material. As shown in Fig. 4, when the movable portion 407 is positioned at the release position, the lock sign 547 is apart from the sign window 241 in the first predetermined direction D1. Accordingly, the lock sign 547 is invisible through the sign window 241. On the other hand, when the movable portion 407 is positioned at the regulated position, the lock sign 547 overlaps with the sign window 241 in the predetermined direction D1. Accordingly, the lock sign 547 is visible through the sign window 241 and the housing 403.

As understood from Fig. 4, the water entering from the sign window 241 is blocked by the case 48 and never reaches the lock plate 54. Moreover, the sign window 241 is located downward of the opening portion 501 in the up-down direction. Accordingly, the water entering from the sign window 241 neither enter the housing 403 from the opening portion 501 nor reach the regulating portion 545 and the regulated portion 565. Thus, also the water entering from the sign window 241 into the charging connector 10 never interrupt movement of the movable portion 407.

Although the lock lug 601 protrudes upward in the up-down direction in the aforementioned embodiment, it may protrude downward. In that case, appropriate modify will be applied to the button member 56. Moreover, although the charging connector 10 has no drain hole in the aforementioned embodiment, the charging connector 10 may have drain holes.

## Claims

1. A charging connector (10) mateable, along a front-rear direction, with an inlet having a locked portion, wherein:
the charging connector comprises a locking portion (607), a button member (56) and an operation regulating mechanism (401);
the locking portion and the locked portion are designed to lock a mated state of the inlet and the charging connector;
the button member has an operation portion (567), a cover portion (563) and a regulated portion (565);
the operation portion is operable to be pressed down in an up-down direction perpendicular to the front-rear direction;
the cover portion is located downward of the operation portion in the up-down direction;
the cover portion has a lower surface (579);
the regulated portion is provided on the lower surface of the cover portion;
the operation regulating mechanism comprises a movable portion (407) and a driving portion (409);
the driving portion drives the movable portion between a regulation position and a release position;
the movable portion has a regulating portion (545);
when the movable portion is in the regulation position, the regulating portion regulates downward movement of the regulated portion to regulate downward movement of the operation portion; and
when the movable portion is in the release position, the regulating portion allows the downward movement of the regulated portion to allow the downward movement of the operation portion; **characterized in that**
when viewed from above in the up-down direction, the regulating portion (545) and the regulated portion (565) are covered by the cover portion (563);
the cover portion has an upper portion (571) and a protection portion (573);
the protection portion extends downward in the up-down direction from the upper portion;
the operation portion (567) is formed on the upper portion;
the upper portion and the protection portion form a protection room (577);
the lower surface of the cover portion is a lower surface (579) of the upper portion;
the regulated portion (565) extends downward from the lower surface (579) of the upper portion; and
when the movable portion i (407) is in the regulation position, the regulating portion (545) and the regulated portion (565) face each other in the protection room (577).

2. The charging connector as recited in claim 1, wherein:
the charging connector has a mating portion (12) to be mated with the inlet;
the mating portion is located at a front end of the charging connector in the front-rear direction;
the operation regulating mechanism has an additional protection room (405);
the additional protection room is located rearward of the driving portion in the front-rear direction and accommodates the movable portion in part;
an upper portion of the additional protection room is provided with an opening portion (501); and
when the movable portion is in the regulation position, the regulating portion and the regulated portion face each other through the opening portion.

3. The charging connector as recited in claim 2, wherein:
around the opening portion, a shield portion (505) is provided; and
the shield portion extends in a direction intersecting to a lateral direction perpendicular to both of the up-down direction and the front-rear direction.

4. The charging connector as recited in claim 3, wherein when viewed from above in the up-down direction, the shield portion is in a region formed by a lower edge of the protection portion.

5. The charging connector as recited in claim 3 or 4, wherein when viewed along the lateral direction, the shield portion overlaps with the protection portion.

6. The charging connector as recited in any one of claims 2 to 5, wherein:
the operation regulating mechanism comprises a solenoid (52);
the solenoid comprises a coil (523) and a plunger (527);
the coil forms the driving portion at least in part;
the plunger forms the movable portion at least in part; and
the plunger extends from the driving portion into the additional protection room.

7. The charging connector as recited in claim 6, wherein:
the operation regulating mechanism comprises a lock plate (54) which is moved in conjunction with the plunger; and
the regulating portion is provided on the lock plate.

8. The charging connector as recited in claim 7, wherein:
the operation regulating mechanism further comprises a spring (529) and a housing (403);
the spring applies a force directed toward the solenoid to the lock plate;
the housing holds the solenoid, the lock plate and the spring; and
the housing forms the additional protection room.

9. The charging connector as recited in claim 8, wherein:
the charging connector further comprises a body (20);
the body is provided with a sign window (241);
the lock plate is provided with a lock sign (547);
the housing of the operation regulating mechanism covers the lock sign; and
when the movable portion is in the regulation position, the lock sign is visible through the housing and the sign window.

10. The charging connector as recited in any one of claims 6 to 9, wherein the plunger has a movable direction inclined against the front-rear direction.

11. The charging connector as recited in any one of claims 2 to 10, wherein:
the operation regulating mechanism is provided with a bearing portion (503);
the button member is able to seesaw around an axis (665) pivotably supported by the bearing portion; and
the bearing portion is located forward of the opening portion in the front-rear direction and has a size larger than that of the opening portion in a lateral direction perpendicular to both of the up-down direction and the front-rear direction.

12. The charging connector as recited in any one of claims 1 to 10, wherein:
the charging connector comprises a lock lever (60);
the locking portion is provided on the lock lever;
the lock lever has a rear end portion (609) which is apart from the locking portion in the front-rear direction;
the operation regulating mechanism is provided with a bearing portion (503);
the button member is able to seesaw around an axis (665) pivotably supported by the bearing portion;
the button member has a lower extension portion (585) and an upper extension portion(583);
the lower extension portion and the upper extension portion are apart from and face each other in the up-down direction;
the rear end portion of the lock lever is located between the lower extension portion and the upper extension portion;
when the locking portion is moved downward, the rear end portion of the lock lever pushes the upper extension portion of the button member upward so that the operation portion of the button member is moved downward;
when the operation portion is pressed down, the lower extension portion of the button member pushes the rear end portion of the lock lever upward so that the locking portion is moved downward; and
when the lock lever is in an initial position, the lower extension portion is positioned apart from the rear end portion of the lock lever.

## Patentansprüche

1. Ein Ladeverbinder (10), der entlang einer Vorne-Hinten-Richtung mit einem Einlass mit einem verriegelten Abschnitt zusammengefügt werden kann, wobei:
der Ladeverbinder einen Verriegelungsabschnitt (607), ein Knopfelement (56) und einen Betätigungsregulierungsmechanismus (401) umfasst;
der Verriegelungsabschnitt und der verriegelte Abschnitt so gestaltet sind, dass sie einen zusammengefügten Zustand des Einlasses und des Ladeverbinders verriegeln;
das Knopfelement einen Betätigungsabschnitt (567), einen Abdeckabschnitt (563) und einen regulierten Abschnitt (565) aufweist;
der Betätigungsabschnitt so betätigt werden kann, dass er in einer Auf-Ab-Richtung senkrecht zur Vorne-Hinten-Richtung nach unten gedrückt wird;
der Abdeckungsabschnitt sich in der Auf-Ab-Richtung unterhalb des Betätigungsabschnitts befindet;
der Abdeckabschnitt eine untere Fläche (579) aufweist;
der regulierte Abschnitt auf der unteren Oberfläche des Abdeckungsabschnitts vorgesehen ist;
der Betätigungsregulierungsmechanismus einen beweglichen Abschnitt (407) und einen Antriebsabschnitt (409) umfasst;
der Antriebsabschnitt den beweglichen Abschnitt zwischen einer Regulierungsposition und einer Freigabeposition antreibt;
der bewegliche Abschnitt einen Regulierungsabschnitt (545) aufweist;
wenn sich der bewegliche Abschnitt in der Regulierungsposition befindet, der Regulierungsabschnitt die Abwärtsbewegung des regulierten Abschnitts regelt, um die Abwärtsbewegung des Betätigungsabschnitts zu regelt; und
wenn sich der bewegliche Abschnitt in der Freigabeposition befindet, der Regulierungsabschnitt die Abwärtsbewegung des regulierten Abschnitts zulässt, um die Abwärtsbewegung des Betätigungsabschnitts zu ermöglichen;
**dadurch gekennzeichnet, dass**
der Regulierungsabschnitt (545) und der regulierte Abschnitt (565), von oben in der Auf-Ab-Richtung gesehen, durch den Abdeckabschnitt (563) abgedeckt sind;
der Abdeckabschnitt einen oberen Abschnitt (571) und einen Schutzabschnitt (573) aufweist;
der Schutzabschnitt sich vom oberen Abschnitt aus nach unten in der Auf-Ab-Richtung erstreckt;
der Betätigungsabschnitt (567) auf dem oberen Abschnitt ausgebildet ist;
der obere Abschnitt und der Schutzabschnitt einen Schutzraum (577) bilden;
die untere Fläche des Abdeckabschnitts eine untere Fläche (579) des oberen Abschnitts ist;
der regulierte Abschnitt (565) sich von der unteren Fläche (579) des oberen Abschnitts aus nach unten erstreckt; und
wenn sich der bewegliche Abschnitt (407) in der Regelungsposition befindet, der Regulierungsabschnitt (545) und der regulierte Abschnitt (565) einander in dem Schutzraum (577) gegenüberliegen.

2. Der Ladeverbinder nach Anspruch 1, wobei:
der Ladeverbinder einen Fügeabschnitt (12) aufweist, der mit dem Einlass zusammenzufügen ist;
der Fügeabschnitt sich an einem vorderen Ende des Ladeverbinders in der Vorne-Hinten-Richtung befindet;
der Betätigungsregulierungsmechanismus einen zusätzlichen Schutzraum (405) aufweist;
der zusätzliche Schutzraum sich in der Vorne-Hinten-Richtung hinter dem Antriebsabschnitt befindet und den beweglichen Abschnitt teilweise aufnimmt;
ein oberer Abschnitt des zusätzlichen Schutzraums mit einem Öffnungsabschnitt (501) versehen ist; und
wenn sich der bewegliche Abschnitt in der Regelungsposition befindet, der Regulierungsabschnitt und der regulierte Abschnitt sich über den Öffnungsabschnitt gegenüber stehen.

3. Der Ladeverbinder nach Anspruch 2, wobei:
um den Öffnungsabschnitt herum ein Abschirmabschnitt (505) vorgesehen ist; und
der Abschirmungsabschnitt sich in einer Richtung erstreckt, die eine seitliche Richtung schneidet, die sowohl zur Auf-Ab-Richtung als auch zur Vorne-Hinten-Richtung senkrecht ist.

4. Der Ladeverbinder nach Anspruch 3, wobei sich der Abschirmungsabschnitt bei Betrachtung von oben in der Richtung von oben nach unten in einem Bereich befindet, der von einer unteren Kante des Schutzabschnitts gebildet wird.

5. Der Ladeverbinder nach Anspruch 3 oder 4, wobei sich der Abschirmungsabschnitt bei Betrachtung in seitlicher Richtung mit dem Schutzabschnitt überlappt.

6. Der Ladeverbinder nach einem der Ansprüche 2 bis 5, wobei:
der Betätigungsregulierungsmechanismus ein Solenoid (52) umfasst;
das Solenoid eine Spule (523) und einen Stößel (527) umfasst;
die Spule zumindest teilweise den Antriebsabschnitt bildet;
der Stößel zumindest teilweise den beweglichen Teil bildet; und
der Stößel sich von dem Antriebsabschnitt aus in den zusätzlichen Schutzraum erstreckt.

7. Der Ladeverbinder nach Anspruch 6, wobei:
der Betätigungsregulierungsmechanismus eine Verriegelungsplatte (54) umfasst, die in Verbindung mit dem Stößel bewegt wird; und
der Regulierungsabschnitt an der Verriegelungsplatte angeordnet ist.

8. Ladeverbinder nach Anspruch 7, wobei:
der Betätigungsregulierungsmechanismus ferner eine Feder (529) und ein Gehäuse (403) umfasst;
die Feder eine zu dem Solenoid hin gerichtete Kraft auf die Verriegelungsplatte ausübt;
das Gehäuse das Solenoid, die Verriegelungsplatte und die Feder hält; und
das Gehäuse den zusätzlichen Schutzraum bildet.

9. Der Ladeverbinder nach Anspruch 8, wobei:
der Ladeverbinder weiterhin einen Körper (20) umfasst;
der Körper mit einem Schildfenster (241) versehen ist;
die Verschlussplatte mit einem Verriegelungsschild (547) versehen ist;
das Gehäuse des Betätigungsregulierungsmechanismus den Verriegelungsschild abdeckt; und
wenn sich der bewegliche Teil in der Regelungsposition befindet, das Verriegelungsschild durch das Gehäuse und das Schildfenster sichtbar ist.

10. Der Ladeverbinder nach einem der Ansprüche 6 bis 9, wobei der Stößel eine bewegliche Richtung aufweist, die gegen die Vorne-Hinten-Richtung geneigt ist.

11. Der Ladeverbinder nach einem der Ansprüche 2 bis 10, wobei:
der Betätigungsregulierungsmechanismus mit einem Lagerabschnitt (503) versehen ist;
das Knopfelement in der Lage ist, um eine Achse (665) zu wippen, die schwenkbar von dem Lagerteil getragen wird; und
der Lagerabschnitt in der Vorne-Hinten-Richtung vor dem Öffnungsabschnitt angeordnet ist und in einer seitlichen Richtung, die sowohl zur Auf-Ab-Richtung als auch zur Vorne-Hinten-Richtung senkrecht ist, eine größere Größe als der Öffnungsabschnitt aufweist.

12. Der Ladeverbinder nach einem der Ansprüche 1 bis 10, wobei:
der Ladeverbinder einen Verriegelungshebel (60) umfasst;
der Verriegelungsabschnitt an dem Verriegelungshebel vorgesehen ist;
der Verriegelungshebel einen hinteren Endabschnitt (609) aufweist, der von dem Verriegelungsabschnitt in der Vorne-Hinten-Richtung beabstandet ist;
der Betätigungsregulierungsmechanismus mit einem Lagerteil (503) versehen ist;
das Knopfelement ist in der Lage, um eine Achse (665) zu wippen, die schwenkbar von dem Lagerteil getragen wird;
das Knopfelement einen unteren Verlängerungsabschnitt (585) und einen oberen Verlängerungsabschnitt (583) aufweist;
der untere Verlängerungsabschnitt und der obere Verlängerungsabschnitt in der Auf-Ab-Richtung voneinander beabstandet sind und einander gegenüberliegen;
der hintere Endabschnitt des Verriegelungshebels sich zwischen dem unteren Verlängerungsabschnitt und dem oberen Verlängerungsabschnitt befindet;
der hintere Endabschnitt des Verriegelungshebels den oberen Verlängerungsabschnitt des Knopfelements nach oben drückt, wenn der Verriegelungsabschnitt nach unten bewegt wird, so dass der Betätigungsabschnitt des Knopfelements nach unten bewegt wird;
der untere Verlängerungsabschnitt des Knopfelements den hinteren Endabschnitt des Verriegelungshebels nach oben drückt, wenn der Betätigungsabschnitt nach unten gedrückt wird, so dass der Verriegelungsabschnitt nach unten bewegt wird; und
der untere Verlängerungsabschnitt von dem hinteren Endabschnitt des Verriegelungshebels beabstandet positioniert ist, wenn sich der Verriegelungshebel in einer Ausgangsposition befindet.

## Revendications

1. Un connecteur de charge (10) pouvant être accouplé, le long d'une direction avant-arrière, avec une entrée ayant une partie verrouillée, dans lequel :
le connecteur de charge comprend une partie de verrouillage (607), un élément de bouton (56) et un mécanisme de régulation du fonctionnement (401) ;
la partie de verrouillage et la partie verrouillée sont conçues pour verrouiller un état accouplé de l'entrée et du connecteur de charge ;
l'élément de bouton a une partie d'opération (567), une partie de couvercle (563) et une partie régulée (565) ;
la partie d'opération est utilisable pour être pressée vers le bas dans une direction haut-bas perpendiculaire à la direction avant-arrière ;
la partie de couvercle est située vers le bas de la partie d'opération dans la direction haut-bas ;
la partie couvercle a une surface inférieure (579) ;
la partie régulée est fournie sur la surface inférieure de la partie couvercle ;
le mécanisme de régulation du fonctionnement comprend une partie déplaçable (407) et une partie d'entraînement (409) ;
la partie d'entraînement entraîne la partie déplaçable entre une position de régulation et une position de libération ;
la partie déplaçable comporte une partie de régulation (545) ;
lorsque la partie déplaçable est dans la position de régulation, la partie de régulation régule le mouvement vers le bas de la partie régulée pour réguler le mouvement vers le bas de la partie d'opération ; et
lorsque la partie déplaçable est dans la position de libération, la partie de régulation permet le mouvement vers le bas de la partie régulée pour permettre le mouvement vers le bas de la partie d'opération ; **caractérisé en ce que**
lorsqu'elles sont vues de dessus dans la direction haut-bas, la partie de régulation (545) et la partie régulée (565) sont couvertes par la partie de couvercle (563) ;
la partie de couvercle a une partie supérieure (571) et une partie de protection (573) ;
la partie de protection s'étend vers le bas dans la direction haut-bas à partir de la partie supérieure ;
la partie d'opération (567) est formée sur la partie supérieure ;
la partie supérieure et la partie de protection forment un espace de protection (577) ;
la surface inférieure de la partie de couvercle est une surface inférieure (579) de la partie supérieure ;
la partie régulée (565) s'étend vers le bas depuis la surface inférieure (579) de la partie supérieure ; et
lorsque la partie déplaçable (407) est en position de régulation, la partie de régulation (545) et la partie régulée (565) se font face dans l'espace de protection (577).

2. Le connecteur de charge selon la revendication 1, dans lequel :
le connecteur de charge possède une partie d'accouplement (12) destinée à être accouplée avec l'entrée ;
la partie accouplée est située à une extrémité avant du connecteur de charge dans la direction avant-arrière ;
le mécanisme de régulation du fonctionnement comporte un espace de protection supplémentaire (405) ;
l'espace de protection supplémentaire est situé à l'arrière de la partie d'entraînement dans la direction avant-arrière et reçoit en partie la partie déplaçable ;
une partie supérieure de l'espace de protection supplémentaire est fournie avec une partie d'ouverture (501) ; et
lorsque la partie déplaçable est en position de régulation, la partie de régulation et la partie régulée se font face à travers la partie d'ouverture.

3. Le connecteur de charge selon la revendication 2, dans lequel :
autour de la partie d'ouverture, une partie de blindage (505) est fournie ; et
la partie de blindage s'étend dans une direction coupant une direction latérale perpendiculaire à la fois à la direction haut-bas et à la direction avant-arrière.

4. Le connecteur de charge selon la revendication 3, dans lequel, vue de dessus dans la direction haut-bas, la partie de blindage se trouve dans une région formée par un bord inférieur de la partie de protection.

5. Le connecteur de chargement selon la revendication 3 ou 4, dans lequel, vue dans la direction latérale, la partie de protection chevauche la partie de protection.

6. Le connecteur de charge selon l'une quelconque des revendications 2 à 5, dans lequel :
le mécanisme de régulation du fonctionnement comprend un solénoïde (52) ;
le solénoïde comprend une bobine (523) et un plongeur (527) ;
la bobine forme la partie d'entraînement au moins en partie ;
le plongeur forme la partie déplaçable au moins en partie ; et
le plongeur s'étend depuis la partie d'entraînement dans l'espace de protection supplémentaire.

7. Le connecteur de charge selon la revendication 6, dans lequel :
le mécanisme de régulation du fonctionnement comprend une plaque de verrouillage (54) qui est déplacée conjointement avec le plongeur ; et
la partie de régulation est fournie sur la plaque de verrouillage.

8. Le connecteur de charge selon la revendication 7, dans lequel :
le mécanisme de régulation du fonctionnement comprend en outre un ressort (529) et un boîtier (403) ;
le ressort applique une force dirigée vers le solénoïde à la plaque de verrouillage ;
le boîtier maintient le solénoïde, la plaque de verrouillage et le ressort ; et
le boîtier forme l'espace de protection supplémentaire.

9. Le connecteur de charge selon la revendication 8, dans lequel :
le connecteur de charge comprend en outre un corps (20) ;
le corps est fourni avec une fenêtre de signe (241) ;
la plaque de verrouillage est fournie avec un signe de verrouillage (547) ;
le boîtier du mécanisme de régulation du fonctionnement couvre le signe de verrouillage ; et
lorsque la partie déplaçable est en position de régulation, le signe de verrouillage est visible à travers le boîtier et la fenêtre de signe.

10. Le connecteur de charge selon l'une quelconque des revendications 6 à 9, dans lequel le plongeur a une direction déplaçable inclinée contre la direction avant-arrière.

11. Le connecteur de charge selon l'une quelconque des revendications 2 à 10, dans lequel :
le mécanisme de régulation du fonctionnement est fourni avec une partie de roulement (503) ;
l'élément de bouton est capable de basculer autour d'un axe (665) supporté de manière pivotante par la partie de roulement ; et
la partie de roulement est située en avant de la partie d'ouverture dans la direction avant-arrière et a une taille plus grande que celle de la partie d'ouverture dans une direction latérale perpendiculaire à la fois à la direction haut-bas et à la direction avant-arrière.

12. Le connecteur de charge tel que décrit dans l'une quelconque des revendications 1 à 10, dans lequel :
le connecteur de charge comprend un levier de verrouillage (60) ;
la partie de verrouillage est fournie sur le levier de verrouillage ;
le levier de verrouillage a une partie d'extrémité arrière (609) qui est séparée de la partie de verrouillage dans la direction avant-arrière ;
le mécanisme de régulation du fonctionnement est fourni avec une partie de roulement (503) ;
l'élément de bouton est capable de basculer autour d'un axe (665) supporté de manière pivotante par la partie de roulement ;
l'élément de bouton a une partie d'extension inférieure (585) et une partie d'extension supérieure (583) ;
la partie d'extension inférieure et la partie d'extension supérieure sont écartées l'une de l'autre et se font face dans la direction haut-bas ;
la partie d'extrémité arrière du levier de verrouillage est située entre la partie d'extension inférieure et la partie d'extension supérieure ;
lorsque la partie de verrouillage est déplacée vers le bas, la partie d'extrémité arrière du levier de verrouillage pousse la partie d'extension supérieure de l'élément de bouton vers le haut de sorte que la partie d'actionnement de l'élément de bouton est déplacée vers le bas ;
lorsque la partie d'opération est pressée vers le bas, la partie d'extension inférieure de l'élément de bouton pousse la partie d'extrémité arrière du levier de verrouillage vers le haut de sorte que la partie de verrouillage est déplacée vers le bas ; et
lorsque le levier de verrouillage est dans une position initiale, la partie d'extension inférieure est positionnée à l'écart de la partie d'extrémité arrière du levier de verrouillage.
